# EUROPEAN PATENT SPECIFICATION

(11) **EP 3 079 182 B1**
(45) Date of publication and mention of the grant of the patent: **05.09.2018**
(21) Application number: 14875895.6
(22) Date of filing: 30.12.2014
(51) Int. Cl.: H01M 2/10, H01M 2/02, H01M 2/20, H01M 2/30

(54) **BATTERY PACK, CHARGER AND ELECTRIC TOOL**
BATTERIEPACK, LADEVORRICHTUNG UND ELEKTROWERKZEUG
BLOC D'ÉLÉMENTS D'ACCUMULATEUR, CHARGEUR ET OUTIL ÉLECTRIQUE

(30) Priority: 31.12.2013 CN 201310752428; 30.09.2014 CN 201410521055; 30.09.2014 CN 201410523039
(43) Date of publication of application: 12.10.2016
(73) Proprietor: Nanjing Chervon Industry Co., Ltd., Nanjing, Jiangsu 211106 (CN)
(72) Inventor: ZHANG, Yuexiang, Nanjing Jiangsu 211106 (CN); LIN, Xiaohong, Nanjing Jiangsu 211106 (CN)
(74) Representative: Sun, Yiming
(86) International application number: PCT/CN2014/095533
(87) International publication number: WO 2015/101283

(56) References cited:
- EP-A2- 0 940 864
- CN-A- 101 632 186
- CN-A- 103 228 115
- CN-U- 202 103 106
- JP-A- H0 620 725
- US-A1- 2006 091 856
- US-A1- 2006 091 858
- US-A1- 2007 237 539
- US-A1- 2010 148 725

## Description

### FIELD OF THE DISCLOSURE

The present disclosure relates to a battery pack, a charger and an electric tool.

### BACKGROUND

US 2007/0237539 A1 describes a system for electrically coupling an electrical supply unit for cordless electrical devices, hand-held power tools in particular, with a charging device. Said electrical supply unit is located in a housing in which at least one rechargeable battery is located that can be recharged using said charging device. Said electrical supply unit and said charging device each have at least a first and a second contact element. Said first and second contact elements of said electrical supply unit interact with said first and second contact elements of said charging device such that said charging procedure takes place only when said electrical supply unit is in a defined end position in said charging device.

US 2010/148725 A1 describes an energy-transmitting device, for transmitting electrical energy between a handheld power tool and/or a battery unit and/or a charging unit. Said energy-transmitting device has at least one pin contact element. Said pin contact element is movably supported.

US 2006/091858 A1 describes a method of conducting an operation including a battery. Said battery includes a cell having a voltage. Power is transferable between said cell and an electrical device. A controller is operable to control a function of said battery. Said controller is also operable with a voltage at least one of equal to and greater than an operating voltage threshold. Said cell is operable to selectively supply voltage to said controller. Said method includes enabling said controller to operate when said voltage supplied by said cell is below said operating voltage threshold.

JP06020725Asuggests following: When a battery cell in a battery back is consumed to require charging, a switch in a charger gets on to charge said cell, and a charging starting signal is supplied to a computation part of said battery pack. A computation part then reads a number of charging times in a memory part, it adds said number by 1 to renew said memory part, and it gives this renewed number of times to be displayed in a display part as secondary battery replacement information.

EP 0 940 864 A2 describes a cordless power tool having a housing which includes a mechanism to couple with a removable battery pack. Said battery pack includes one or more battery cells as well as a vent system in said battery pack housing which enables fluid to move through said housing. A mechanism is associated with said battery pack to dissipate heat from said battery pack.

A battery pack, as a power source of a cordless electrical tool, is generally the component that functions to limit development of cordless electrical tools. Conventional battery packs usually only have an output voltage under 30V, and upon driving large-power electric tools, they usually cause problems such as insufficient power and undesirable endurance. Currently there is not a battery pack whose output voltage is above 30V and whose structure is safe and reasonable, and a charger adapted for the battery pack.

### SUMMARY

To overcome the drawbacks in the prior art, an object of the present disclosure is to provide battery pack whose output voltage exceeds 30V and whose structure is safe and reasonable, the present disclosure is also to provide a charger and an electric tool which are apply to the battery pack.

To achieve the above object, the present disclosure generally describes a battery pack, comprising: a battery housing, a battery cell assembly within the battery housing, and at least two connection terminals associated with the battery housing and capable of transmitting electrical energy or signals, wherein said connection terminals are designed to be connectable to sheet-shaped charging terminals of a charger and/or to sheet-shaped tool terminals of an electric tool; the battery housing comprising an insert housing wall; the battery cell assembly comprising more than one battery cell unit; the insert housing wall comprising an insertion structure and terminal ports for each the at least two connection terminals; and the insertion structure at least having an insertion direction which forms an angle greater than or equal to 0 degree and less than or equal to 45 degrees with respect to a maximum projection surface or a maximum size direction of the battery cell assembly. Said battery cell assembly comprises a left unit body and a right unit body which are mirror-symmetrical, and a connecting unit body provided there between. Said left unit body and said right unit body form mirror symmetry. A symmetrical mirror surface is perpendicular to a maximum projection surface of said battery cell assembly. If said maximum projection surface of said parallel battery cell assembly is regarded as being in the horizontal direction, said left unit body and right unit body go beyond the connecting unit body on both upper and lower sides and form two grooves and having different sizes on both sides of said connecting unit body. A distance of each of the connection terminals from an outer surface of the insert housing wall is greater than or equal to 7 mm.

Furthermore, the insertion structure may at least comprise an insertion starting end and an insertion terminating end in the insertion direction, and the terminal ports may be located on a side of the insertion structure adjacent to the insertion terminating end.

Furthermore, the maximum projection surface of the insert housing wall may overlap the maximum projection surface of the battery cell assembly; the insertion direction may be parallel to the maximum projection surface of the battery cell assembly; the insertion direction may be parallel to the maximum size direction of the battery cell assembly; the insertion structure may comprise insertion slots and a receiving slot; a direction perpendicular to a maximum projection surface of the insert housing wall may be regarded as an up-down direction, and a direction parallel to the insertion direction may be regarded as a front-rear direction, a side where the insertion starting end is located may be regarded as a front side, and a side where the insertion terminating end is located may be regarded as a rear side; two insertion slots may be respectively disposed on left and right sides above the receiving slot, the insertion slots and the receiving slot may be opened on the front side, the two insertion slots may be respectively opened leftwards and rightwards, and the receiving slot may be recessed downwards and opened upwards.

Furthermore, the insert housing wall may form a stop wall surface behind the receiving slot, and the terminal port may be partially provided on the stop wall surface and located between the two insertion slots; the insert housing wall may be formed with a wall surface structure having an L-shaped section, wherein the wall surface structure comprises a locking wall surface corresponding to one edge of the L-shape and a stopping wall surface corresponding to the other edge of the L-shape; the locking wall surface may be parallel to the maximum projection surface of the insert housing wall, and the stopping wall surface may be perpendicular to the maximum projection surface of the insert housing wall, and one terminal port may be formed by hollowing the locking wall surface and the stopping wall surface as well as a connection portion there between.

Furthermore, four terminal ports may be arranged left-right symmetrically, each terminal port may have a left-right symmetrical structure, and a distance of the two terminal ports in the middle may be smaller than or equal to a distance between one of the two terminal ports in the middle and the respective outside terminal port; a battery pack positive connection terminal and a battery pack negative connection terminal may be correspondingly provided at the two outside terminal ports; and a communication connection terminal and a temperature connection terminal may be correspondingly provided at the two inside terminal ports.

Furthermore, in the insertion direction of the insertion structure, a center of gravity of the battery pack may be located between the insertion starting end and the insertion terminating end.

Furthermore, a ratio of the electrical energy capacity of the battery pack to its weight may be greater than 70 Wh/kg and less than 100 Wh/kg; a ratio of the electrical energy capacity of the battery pack to its volume may be greater than 70 Wh/cm³ and less than 100 Wh/cm³.

Also generally described is a charger comprising a charging housing, a charging device, and a sheet-shaped charging terminal to electrically connect the charging device to the battery pack; the charging housing comprising a charging housing wall including a mounting structure for mounting the battery pack to a mounting position, wherein the mounting structure at least has a mounting direction which forms an angle greater than or equal to 0 degree and less than or equal to 45 degrees with respect to a maximum projection surface of the charging housing wall. Said sheet-shaped charging terminal is connectable to said connection terminal of any of said battery packs described above. The charger at least has a charging voltage of 56V and a charging power of 550W. The charging terminal is configured as a sheet-shaped terminal with a thickness in a range of 0.5 mm to 1 mm. A distance extending out of the charging housing in the front direction and the up-down direction is in a range of 15 mm to 20 mm.

Furthermore, the charger may further comprise a safety switch disposed in the charging housing and configured to control whether the charging terminal is charged or not.

Furthermore, the mounting direction may be parallel to the maximum projection surface of the charging housing wall; the mounting structure may comprise insertion protrusions and a positioning protrusion, and the mounting structure may at least comprise a mounting starting end and a mounting terminating end in the mounting direction; a direction perpendicular to the maximum projection surface of the charging housing wall may be an up-down direction; the charging housing wall may be located on an upper side in the charging housing; a direction parallel to the mounting direction may be the front-rear direction, a side where the mounting starting end is located may be regarded as a front side, and a side where the mounting terminating end is located may be regarded as a rear side; the positioning protrusion may protruded upwardly, and two insertion protrusion may be respectively disposed on left and right bottom sides of the positioning protrusion and respectively protruded leftwards and rightwards.

Furthermore, at a front end of the insertion protrusion and the positioning protrusion, the charging housing wall may be formed with a positioning wall surface for stopping the battery pack to limit it in the mounting position; the charging terminal may be located on a side of the mounting structure adjacent to the mounting starting end.

Furthermore, an insurance switch may be provided at the mounting terminating end and triggered by contact of the battery pack at the mounting position and reset when the battery pack retreats out of the mounting position; the insurance switch may form a linkage with the safety switch; when the insurance switch is triggered, the safety switch may cause the charging terminal to be placed into a state for charging; when the insurance switch is reset, the safety switch may cause the charging terminal to be placed into a state for uncharging.

Furthermore, the charging housing may be formed with an air duct structure, the air duct structure may at least comprise an air inlet and an air outlet; the air inlet may be disposed at the charging housing wall, and the charger may be provided with an air flow element in a channel between the air inlet and the air outlet.

Furthermore, the charging terminal may be disposed at the positioning wall surface and located between the two insertion protrusions; the maximum projection surface of the charging housing wall may be perpendicular to a horizontal plane.

Furthermore, the charger has at least a charging voltage of 56V and a charging power of 550W; wherein the charging terminal is configured as a sheet-shaped terminal with a thickness in a range of 0.5 mm to 1 mm; and wherein a distance extending out of a housing of a charger in the front direction and the up-down direction is in a range of 15 mm to 20 mm.

Still further is described an electric tool which comprises a battery pack and a main machine powered by any of the battery packs described above; wherein the main machine comprises a motor, a tool housing, and said tool terminal for forming electrical energy or signal transmission with the battery pack, wherein the motor is disposed in the tool housing; the tool housing comprises a loading housing wall; and the loading housing wall comprises a loading structure for loading the battery pack to a loading position.

Furthermore, the loading structure may at least have a loading direction parallel to the insertion direction; the loading structure may comprise loading protrusions and a central protrusion, a direction perpendicular to a maximum projection surface of the tool housing wall may be regarded as an up-down direction, and a direction parallel to a loading direction may be regarded as a front-rear direction; the central protrusion may be protruded upward, and two loading protrusions may be respectively provided on left and right bottom sides of the central protrusion and respectively protruded leftwards and rightwards.

Furthermore, the main machine may further comprise a locking mechanism for locking the battery pack at a loading position, and the insert housing wall may be formed with a locking structure cooperating with the locking mechanism; the main machine may further comprise an ejection structure for ejecting the battery pack out of the loading position, and the battery pack may be provided with an ejection wall surface contacting with the ejection mechanism; a maximum projection surface of the ejection wall surface may be perpendicular to the loading direction.

Furthermore, a distance of the tool terminal away from an outer surface of the loading housing wall may be greater than or equal to 7 mm, the tool terminal may be configured as a sheet-shaped terminal with a thickness in a range of 0.5 mm to 1 mm and a distance extending out of the tool housing may be a range of 15 mm to 20 mm.

Furthermore, the electric tool may be a mower, and a weight ratio of the battery pack to the main machine may be in a range of 0.04 to 0.14.

Furthermore, the electric tool may be a pruner, and a weight ratio of the battery pack to the main machine may be in a range of 0.4 to 0.6.

Furthermore, the electric tool may be a chain saw, and a weight ratio of the battery pack to the main machine may be in a range of 0.250 to 0.875.

Furthermore, the electric tool may be an air blower, and a weight ratio of the battery pack to the main machine may be in a range of 0.04 to 1.

Furthermore, the electric tool may be a grass trimmer, and a weight ratio of the battery pack to the main machine may be in a range of 0.3 to 0.8.

The advantage of the present disclosure is to provide battery pack whose output voltage exceeds 30V and whose structure is safe and reasonable.

### BRIEF DESCRIPTION OF THE DRAWINGS

Fig. 1 is a structural schematic view of an exemplary battery pack constructed according to the present disclosure;
Fig. 2 is a structural schematic view of the battery pack of Fig. 1 as viewed from another angle;
Fig. 3 is a structural schematic view of a whole structure of a plurality of battery cells in the battery pack as shown in Fig. 1;
Fig. 4 is a structural schematic view of the battery pack of Fig. 1 as viewed in a direction perpendicular to a maximum projection surface of an insert housing wall;
Fig. 5 is a structural schematic view of the battery pack of Fig. 1 as viewed in a direction parallel with the maximum projection surface of the insert housing wall;
Fig. 6 is a cross sectional view taken along line D-D of Fig. 5;
Fig. 7 is a structural schematic view of partial internal structures of the battery pack of Fig. 1;
Fig. 8 is a structural schematic view of an exemplary charging assembly constructed according to the present disclosure;
Fig. 9 is a structural schematic view of the charger shown in Fig. 8;
Fig. 10 is a schematic view of a heat dissipation structure and an air duct structure in the charging assembly shown in Fig. 9;
Fig. 11 is a structural schematic view of an exemplary charger also constructed according to the present disclosure;
Fig. 12 is a schematic view of internal structures of the charger shown in Fig. 11;
Fig. 13 is a schematic view of internal structures of the charger shown in Fig. 11 as viewed from another angle;
Fig. 14 is a schematic view of an exemplary electric tool constructed according to the present disclosure;
Fig. 15 is a schematic view of the electric tool shown in Fig. 14 when the battery pack is in a detached state; and
Fig. 16 is a partial schematic view of a main machine of the electric tool shown in Fig. 14.

Corresponding reference numerals indicate corresponding parts throughout the several views of the drawings.

### DETAILED DESCRIPTION

The following description of preferred embodiments as shown in the drawings is provided to introduce the details of the invention.

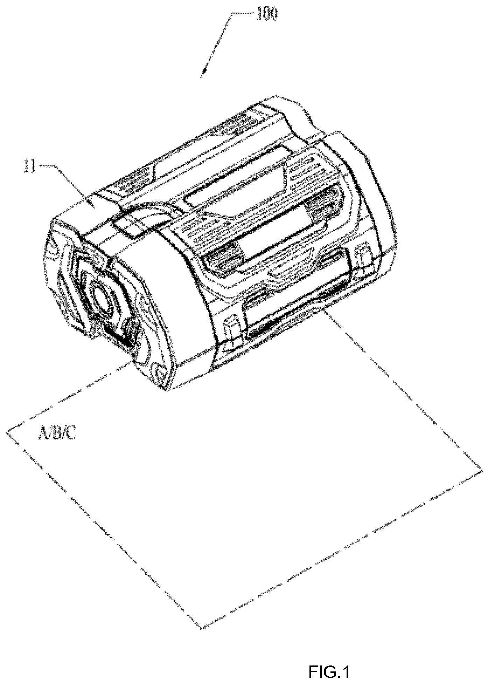

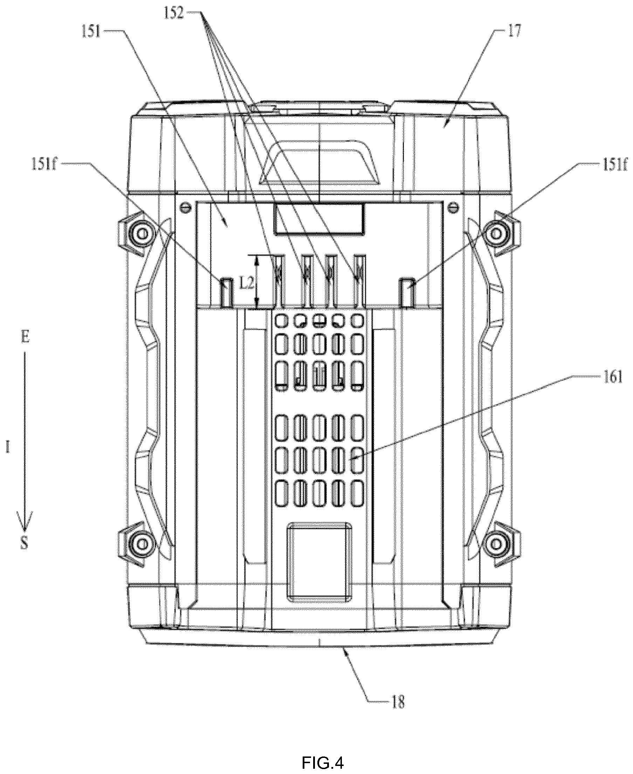

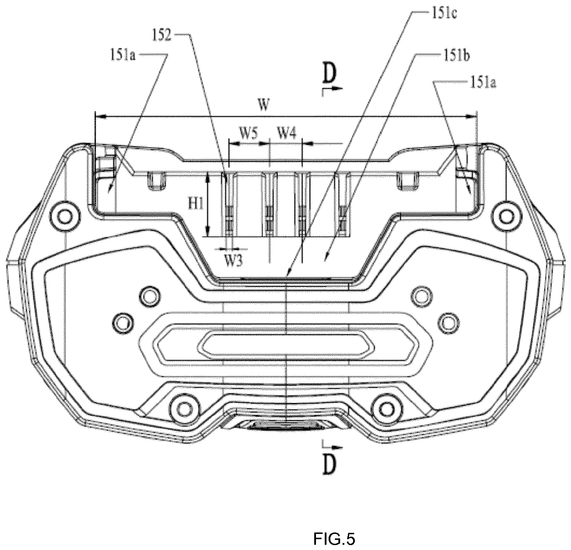

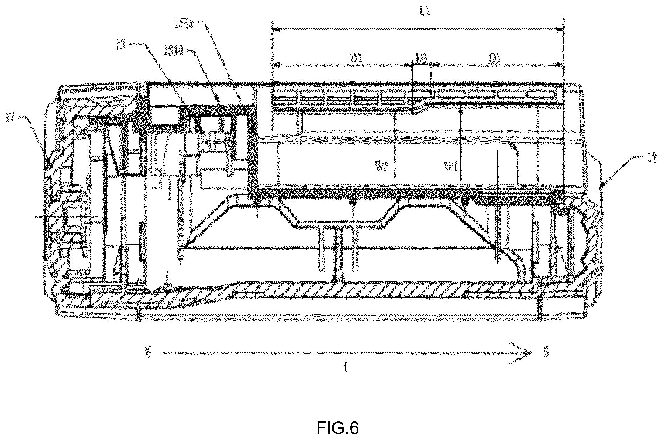

Referring to Fig. 1 to Fig. 7, a battery pack 100 constructed according to the present disclosure comprises a battery housing 11, a battery cell assembly 12, a plurality of connection terminals13, a main control circuit board 14; wherein the battery pack 100 at least has an output voltage of 56V. As far as a capability of the output voltage is concerned, the battery pack can output an output voltage of at least 56V.

The battery cell assembly 12 comprises more than one battery cell unit 121, and the battery cell assembly 12 is configured as a whole comprising a plurality of battery cell units 121 which are in a certain electrical connection relationship and arranged according to a certain structure, and it is disposed in the battery housing 11 as an electrical power source of the battery pack 100. Certainly, it is not excluded that the battery cell assembly 12 only includes one battery cell unit 121.

The battery pack 100 should form a relatively compact structure in a 3D space so that it can be easily carried and can be easily inserted into a corresponding charger 200 and an electric tool 300. As far as the battery pack 100 having a smaller output voltage is concerned, the number of the battery cell units 121 is limited, so the layout of the battery cell units 121 usually need not be considered, and the only thing to do is to arrange them tidy.

However, as far as the battery pack 100 of the present disclosure is concerned, it at least has an output voltage of 56V, so it must have relatively more battery cell units 121 and each battery cell unit 121 has larger heat generation upon being supplied power and charge. If the battery cell units are arranged tidy according to current arrangement method, heat inside the battery pack 100 concentrates and is hard to be dissipated so as to cause a hidden danger. The relatively more battery cell units 121 cannot be simply disposed linearly in a certain dimension, and the shape and size of the resultant battery pack is not suitable for carrying and installation.

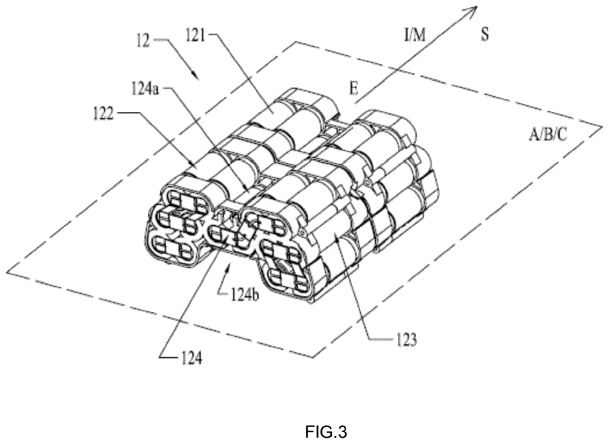

Therefore, as a preferred solution, referring to Fig. 3, the battery cell unit 121 is generally cylindrical. In order to expose as much as possible the surface of the battery cell units 121 in the battery cell assembly 12, the battery cell units 121 may be arranged in a manner as shown in Fig. 3. Assume that a maximum projection surface A of the parallel battery cell assembly 12 is oriented in a horizontal direction, vertically adjacent battery cell units 121 are disposed staggered in the horizontal direction, and horizontally adjacent battery cell units 121 may be disposed either staggered or aligned. To make the battery cell units 121 have sufficient heat dissipation area and meanwhile make a size of the whole battery cell assembly 12 not too large, the horizontally adjacent battery cell units 121 are arranged aligned. That is to say, in a 3D coordinate system, a plurality of battery cell units 121 may be arranged repeatedly in two of the dimensions, and adjacent battery cell units 121 are arranged staggered in the remaining one dimension. Certainly, it is feasible to arrange adjacent battery cell units 121 staggered in two dimensions even three dimensions. However, this obviously increases the size of the battery pack 100 so that its structure is not compact. Therefore, the solution as shown in Fig. 3 caters to both heat dissipation and the size of the battery pack.

Referring to the solution as shown in Fig. 3, it is improved not only in respect of the arrangement manner of the battery cell units 121 but also in respect of the shape of the whole battery cell assembly 12 composed of the battery cell units 121. As known from Fig. 3, when the battery cell units 121 are arranged in a staggered manner in a certain dimension, it is difficult for the whole battery cell assembly 12 to form a regular 3D shape. The battery cell assembly 12 comprises a left unit body 122 and a right unit body 123 which are mirror-symmetrical, and a connecting unit body 124 provided there between, wherein the left unit body 122 and the right unit body 123 form mirror symmetry, and the symmetrical mirror surface is perpendicular to the maximum projection surface A of the battery cell assembly 12. If the maximum projection surface Aof the parallel battery cell assembly 12 is regarded as being in the horizontal direction, the left unit body 122 and right unit body 123 go beyond the connecting unit body 124 on both upper and lower sides and form two grooves 124a and 124b having different sizes on both sides of the connecting unit body 124.

Specifically, both the left unit body 122 and the right unit body 123 comprise three layers of the battery cell units 121, and each layer comprises many vertically-aligned battery cell units 121, namely, the battery cell units 121 are arranged repeatedly in the horizontal direction. Each layer is disposed staggered relative to the upper layer towards the side away from the connecting unit body 124, and the connecting unit body 124 only comprises one layer of the battery cell units 121 and is aligned with an intermediate layer of the left unit body 122 and the right unit body 123. Both sides of the layer of the connecting unit body 124 and one more layer on both sides of the left unit body 122 and right unit body 123 form two grooves 124a, 124b having different sizes (because different layers are arranged staggeredly and outwardly). Such arrangement is advantageous in that the lateral sides of all cylindrical battery cell units 121 in the left unit body 122 are partially exposed, but not completely encompassed by the surrounding battery cell units 121, so that all battery cell units 121 can effectively dissipate heat and thereby avoid heat concentration. It is the same with the right unit body 123. Regarding the connecting unit body 124, all battery cell units 121 included therein do not have structure blocking heat dissipation on both upper and lower sides, so they can more easily dissipate heat.

It should be noted that, since the connecting unit body 124 can more easily dissipate heat as compared with the left unit body 122 and the right unit body 123, if all battery cell units 121 dissipate equivalent heat, heat will diffuse from the left unit body 122 and the right unit body 123 towards to the two grooves 124a, 124b having different sizes on both sides of the connecting unit body 124, especially the larger groove 124b.

This is also an advantage of the battery cell assembly 12 of the present disclosure arranged as shown in Fig. 3. When the battery housing 11 is provided, a major ventilating structure for heat dissipation purpose is correspondingly disposed at the groove 124b, whereby a larger heat dissipation area can be obtained and high heat dissipation efficiency can be achieved since the battery cell units 121 exist on three sides of this location. More advantageously, the battery cell assembly 12 itself has heat diffusion from the left unit body 122 and right unit body 123 towards the groove 124b; if a ventilating structure is disposed at this location to further guide the heat diffusion, heat is diffused out of the battery housing 11 more effectively. Correspondingly, the area of ventilating structures provided at the remaining locations of the battery housing 11 may be reduced to ensure structural strength of the whole battery housing 11.

As a preferred solution, the battery housing 11 has a shape suitable for the battery cell assembly 12.

Referring to Figs. 1, 2, 4, and 7, the battery housing 11 comprises an insert housing wall 15 mainly used to achieve insertion and electrical connection of the battery pack 100 with the charger 200 and the electrical tool 300. Certainly, the battery housing 11 further comprises other housing wall portions.

The insert housing wall 15 comprises an insertion structure 151 and terminal ports 152. The insertion structure 151 at least has an insertion direction I, the insertion direction I forms an angle greater than 0 degree and less than 45 degrees with respect to the maximum projection surface A or a maximum size direction M of the battery cell assembly 12, or forms an angle greater than 0 degree and less than 45 degrees with respect to both the maximum projection surface A and the maximum size direction M of the battery cell assembly 12.

Such design is advantageous in the following: the battery pack of the present disclosure at least has an output voltage of 56V, so it has more battery cell units 121 than general battery packs having a lower output voltage and its size and weight are larger. Therefore, to ensure a sufficient contact area to achieve stop effect perpendicular to the insertion direction I and a sufficient insertion length upon insertion, firstly, it tries to be parallel with the maximum size direction M of the battery cell assembly 12 to obtain a sufficient insertion length, and secondly, it seeks to be parallel with the maximum projection surface A of the battery cell assembly 12 as much as possible to obtain a sufficient area to provide the insertion structure 151, the terminal ports 152 and so on.

As known from experiments, if the angle formed by the insertion direction I and the maximum projection surface A, the maximum size direction M of the battery cell assembly 12 exceeds 45 degrees, the length that can be obtained by the insertion direction I being reduced as the angle increases. Furthermore, the maximum projection surface B of the battery housing 11 and the maximum projection surface A of the battery cell assembly 12 are generally overlapped to make the battery pack 100 structurally compact. Therefore, when the angle formed by the insertion direction I and the maximum projection surface A of the battery cell assembly 12 exceeds 45 degrees, the housing area of the battery housing 11 that can be used by the insertion structure 151 reduces as the angle increases. Hence, the present disclosure employs the above design solution.

As a preferred solution, the insertion direction I may be parallel to the maximum projection surface A and the maximum size direction M of the battery cell assembly 12.

As a further preferred solution, a maximum projection surface C of the insert housing wall 15 overlaps the maximum projection surface A of the battery cell assembly 12. Furthermore, they both overlap with the maximum projection surface B of the battery housing 11. That is to say, the battery housing 11 and the battery cell assembly 12 have the same maximum projection surfaces B, A, and the maximum projection surface C of the insert housing wall 15 for forming the insertion structure 151 in the battery housing 11 also overlaps with them. Such design is advantageous in that the battery housing 11 can receive the battery cell assembly 12 with a relatively compact space structure, and the insert housing wall 15 has an enough size to form the insertion structure 151.

In the insertion direction I, the insertion structure 151 at least comprises an insertion starting end S and an insertion terminating end E, and the terminal ports 152 are located on a side of the insertion structure 151 adjacent to the insertion terminating end E. Further preferably, the terminal ports 152 may be disposed at the insertion terminating end E. Such arrangement is provided such that the connection terminal 13 cannot be contacted immediately at the beginning of the insertion and can be contacted only after insertion is performed to a certain degree. This ensures that insertion and power supply performed by the user is a real intention but not a misoperation. Correspondingly, upon being detached, the electrical connection is disconnected and thus safe use can be ensured once the detachment is completed.

The insertion structure 151 comprises insertion slots 151a and a receiving slot 151b.

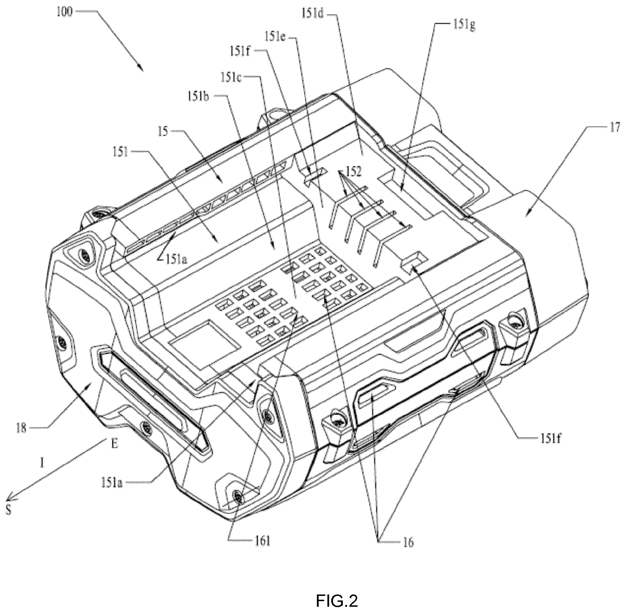

To facilitate introduction of the specific solution of the insertion structure 151, referring to Fig. 2, a direction perpendicular to the maximum projection surface C of the insert housing wall 15 is regarded as an up-down direction, a direction parallel to the insertion direction I is regarded as a front-rear direction, a side where the insertion starting end S is located is regarded as a front side, and a side where the insertion terminating end E is located is regarded as a rear side.

Two insertion slots 151b are respectively disposed on left and right sides above the receiving slot 151a, the insertion slots 151a and the receiving slot 151b are all opened on the front side, the two insertion slots 151a are respectively opened leftwards and rightwards, and the receiving slot 151b is recessed downward and opened upward.

As a preferred solution, the insert housing wall 15 forms a stop wall surface 151e behind the receiving slot 151b, and the terminal ports 152 are partially provided on the stop wall surface 151e and located between the two insertion slots 151a.

The stop wall surface 151e functions to stop relative movement of the charger 200 or the electric tool 300 relative to the battery pack 100 upon completion of the insertion. Therefore, in this embodiment, a location of the stop wall surface 151e may be regarded as the insertion terminal end E, and the end of the insertion slots 151a and the receiving slot 151b on the forwardly open side may be regarded as the insertion starting end S. The terminal ports 152 are partially provided at the location so that a structure cooperating with the connection terminal 13 can be completely inserted in the battery housing 11 to cooperate therewith upon completion of insertion.

It shall be noted that, the relative position of the terminal ports 152 in the insertion direction I and the insertion slots 151a and receiving slot 151b are designed for the following purpose. Since the battery pack 100 according to the present disclosure at least has an output voltage of 56V, it can be dangerous for a human body to directly contact either the connection terminal 13 of the battery pack itself or a corresponding electrical connection structure of the charger 200 and the electric tool 300. Furthermore, as needed by transmission of electrical energy, these structures must have a certain size, for example, for the sake of security, the connection terminal 13 is disposed in the interior of the battery housing 11. Hence, its insertion and a terminal forming connection with it must require a sufficient insertion size, so it must be ensured that when the terminals forming electrical connection are not yet completely disconnected during insertion and detachment, the user cannot contact them. According to the above technical solution of the present disclosure, firstly, security assurance is achieved from a relative position of the terminal port 152 in the insertion direction I. According to the previous solution, upon ether insertion or detachment, when the connection terminal 13 is still electrically connected with an external terminal, the charger 200 or the electric tool 300 is adjacent to the insertion terminating end E in the insertion direction I relative to the battery pack 100. At this position, by virtue of the design of the positions of the inserting structure 151 comprising the insertion slots 151a and the receiving slot 151b as well as the terminal ports 152, it is difficult for the user to extend his finger into the receiving slot 151b to contact terminals whose electrical connection is not yet disconnected.

As a preferred solution, the insert housing wall 151 is formed with a wall surface structure having an L-shaped section. The wall surface structure comprises a locking wall surface 151d corresponding to one of the edges of the L-shape and a stopping wall surface 151e corresponding to the other of the edges of the L-shape. The locking wall surface 151d is parallel to the maximum projection surface C of the insert housing wall 151, and the stopping wall surface 151e is perpendicular to the maximum projection surface C of the insert housing wall 151. One of the terminal ports 151 is formed by hollowing the locking wall surface 151d and the stopping wall surface 151e and a connection location there between.

As a preferred solution, a left-right distance W of a bottom surface of the insertion slot 151a is in a range of 90 mm to 95 mm.

The insertion slot 151a at least comprises two different segments in the front-rear direction, a cross section of a forward segment D1 is greater than that of a rearward segment D2, and a transition segment D3 having a gradually changing cross section may be provided there between. Such arrangement is advantageous in that the larger segment D1 makes the matching at the beginning of the insertion easier, and meanwhile the rearward segment D2 having a thicker slot wall ensures structural strength and tight mating degree as needed for load carrying after completion of the insertion. Preferably, a length L1 of the insertion slot 151a in the insertion direction I is in a range of 90 mm to 100 mm, more specifically 97.3mm, wherein the forward segment is 44.4 mm, the transition segment D3 is 6.1 mm and the rearward segment is 46.8 mm; a slot width (a dimension in an up-down direction in the slot) W1, W2 of the forward segment D1 and rearward segment D2 of the insertion slot are respectively 10.4 mm and 8.4 mm. Such dimensions can ensure the insert housing wall 15 has a sufficient structural strength when being made of a general engineering plastic.

Four terminal ports 152 are arranged left-right symmetrically, each terminal port 152 is a left-right symmetrical structure, and a distance of the two terminal ports 152 in the middle is smaller than or equal to a distance between one of the terminal ports 152 in the middle and the respective outside terminal port 152. A battery pack positive connection terminal and a battery pack negative connection terminal are correspondingly provided at the two outside terminal ports 152; a communication connection terminal and a temperature connection terminal are correspondingly provided at the two inside terminal ports 152. Such arrangement is advantageous in that a farther distance between the battery pack positive connection terminal and the battery pack negative connection terminal effectively prevents short-circuiting and meanwhile effectively uses the space therebetween.

Two wrong insertion-preventing slots 151f having different sizes are provided at a connection of the locking wall surface 151d and the stopping wall surface 151e and arranged inside the two insertion slots 151a in the left-right direction. The wrong insertion-preventing slots 151f can effectively prevent the terminal port 152 from being wrongly inserted.

As a preferred solution of specific dimensions, the terminal port 152 is configured to have a dimension W3 in the left-right direction in a range of 1.5 mm to 2 mm, a dimension H1 in the up-down direction in a range of 15 mm to 20 mm, and a dimension L2 in the front-rear direction in a range of 10 mm to 20 mm. A centerline of left-right symmetry of the terminal port 152 is called a central line, and a distance between the central lines of adjacent terminal ports 152 is in a range of 3 mm to 12 mm. A distance W4 between the central lines of the two middle terminal ports 152 is preferably 8 mm, and a distance W5 between the central line of the middle terminal port 152 and the central line of the outside terminal port 152 is preferably 10 mm.

As a preferred solution, the battery housing 11 further comprises a heat dissipation structure 16 to discharge the heat generated by the battery cell assembly 12 out of the battery housing 11.

Generally, the heat dissipation structure 16 can be distributed everywhere in the battery housing 11, e.g., through holes, air ducts or the like for heat dissipation purpose.

Specifically, the heat dissipation structure 16 at least comprises a main heat dissipation window 161 disposed at the insert housing wall. Preferably, the main heat dissipation window 161 may be formed by arranging a plurality of identical through holes.

Regarding the battery cell assembly 12, the main heat dissipation window 161 is disposed at a location corresponding to the groove 124b of the battery cell assembly 12, thereby achieving efficient heat dissipation.

As far as the battery housing 11 is concerned, at the receiving slot 151b, the insert housing wall 15 is provided with a main heat dissipation panel 151c parallel to the maximum projection surface C of the insert housing wall 15, the main heat dissipation window 161 is disposed at the main heat dissipation panel 151c of the receiving slot 151b because this location corresponds to the groove 124b at the connecting unit body 124 of the battery cell assembly 12, and this location, relative to the insert housing wall 15, has a sufficient area to provide the main heat dissipation window 161 without affecting the structural strength of the insertion slots 151a on both sides.

As a further preferred solution, a ratio of a heat dissipation area of the main heat dissipation window 161 to a total heat dissipation area of the heat dissipation structure 16 is in a range of 0.4 to 0.6; a ratio of the total heat dissipation area of the heat dissipation structure 16 to a volume of the battery housing 11 is in a range of 0.0005 mm²/mm³ to 0.0012 mm²/mm³; a ratio of the total heat dissipation area of the heat dissipation structure 16 to a surface area of the battery housing 11 is in a range of 0.015 to 0.030.

Such arrangement aims to ensure a sufficient heat dissipation area at the connecting unit body 23 to dissipate heat. When the technical solution shown in Fig. 1 is employed, it is detected that a good heat dissipation effect can be achieved if the ratio of the total heat dissipation area of the heat dissipation structure 16 to a volume of the battery housing 11 and the ratio of the total heat dissipation area of the heat dissipation structure 16 to a surface area of the battery housing 11 are maintained in the above ranges.

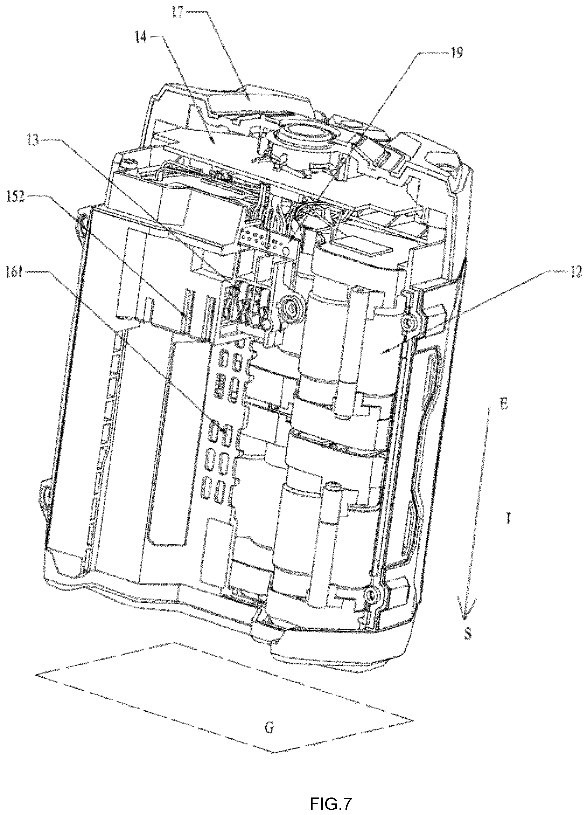

Referring to Fig. 7, the battery pack 100 further comprises a main control circuit board 14 disposed in the battery housing 11, wherein a maximum projection surface G of the main control circuit board 14 is perpendicular to the insertion direction I.

Assume that a direction parallel to the insertion direction I be regarded as a front-rear direction, a side where the insertion starting end S is located is regarded as a front side, and a side where the insertion terminating end E is located is regarded as a rear side; the main control circuit board 14 is located behind the battery cell assembly 12 and spaced apart from it at least 15 mm. The battery housing 11 further comprises an end cap 17 whose maximum projection surface G is perpendicular to the maximum projection surface A of the battery cell assembly 12. The end cap 17 is formed with a receiving space for receiving the main control circuit board 14. Such arrangement is advantageous in avoiding the heat generated by the main control circuit board 14 from exerting a larger influence on the battery cell assembly 12, meanwhile individually encapsulating the main control circuit board 14 in the end cap 17, reducing its blocking to heat dissipation of the battery cell assembly 12, and facilitating performance of wiring and encapsulation in the embodiment as shown in Fig. 7. As a further preferred solution, the battery pack 100 further comprises an auxiliary circuit board 19 smaller than the main control circuit board 14. The auxiliary circuit board 19 is disposed in a direction perpendicular to the main control circuit board 14 and arranged between the battery cell assembly 12 and the connection terminal 13. The auxiliary circuit board 19 forms electrical connection with the connection terminal 13.

As a preferred solution, a distance of the connection terminal 13 from an outer surface of the insert housing wall 15 is greater than or equal to 7 mm; more specifically, a distance of the connection terminal 13 from an outer surface of the insert housing wall 15 at the terminal port 152 is greater than or equal to 7 mm. That is to say, in a scope of the terminal port 152, an object that cannot pass through the terminal port 152 is at least 7 mm away from the connection terminal 13. Such arrangement is advantageous in avoiding a hidden danger caused by a too short distance between a finger and the connection terminal 13. It is found from experiments that a voltage of 56V is by far insufficient to cause breakdown in air and discharge at a distance of 5 mm.

As a preferred solution, in the insertion direction I of the insertion structure 151, a center of gravity of the battery pack 100 is located between the insertion starting end S and the insertion terminating end E. Such arrangement is advantageous in that the user can conveniently master the battery pack 100 upon insertion to complete the insertion or detachment action.

As a preferred solution, an electrical energy capacity of the battery pack 100 is greater than 100 Wh; a ratio of the electrical energy capacity of the battery pack 100 to its weight is greater than 70 Wh/kg and less than 100 Wh/kg; a ratio of the electrical energy capacity of the battery pack 100 to its volume is greater than 70 Wh/cm³ and less than 100 Wh/cm³. Such arrangement is advantageous as follows: the output voltage of at least 56V of the battery pack 100 of the present disclosure indicates that it is designed for some electric tools with larger power. According to detection of some commonly-used electric tools with larger power, if the electrical energy capacity thereof is smaller than 100 Wh, it cannot meet the needs of continued operation of these larger-power electrical tools. These larger-power electric tools comprise mowers, grass trimmers, chain saws, pruners, air blowers and the like. If a ratio of the electrical energy capacity of the battery pack 100 to its weight is too large, much additional weight will occurs in the battery pack 100 so that the user must operate with extra force; if the ratio is too small, the battery cell assembly 12 is not sufficient to provide the output voltage of 56V and continued operation capability. The purpose of determining the ratio of the electric energy capacity of the battery pack 100 to its volume lies in that the heat generation of the battery cell assembly 12 is usually related to the electric energy capacity, setting the ration in the above range can enable the battery pack 100 with an output voltage of 56V to perform effective heat dissipation and keep the battery pack 100 from overheat.

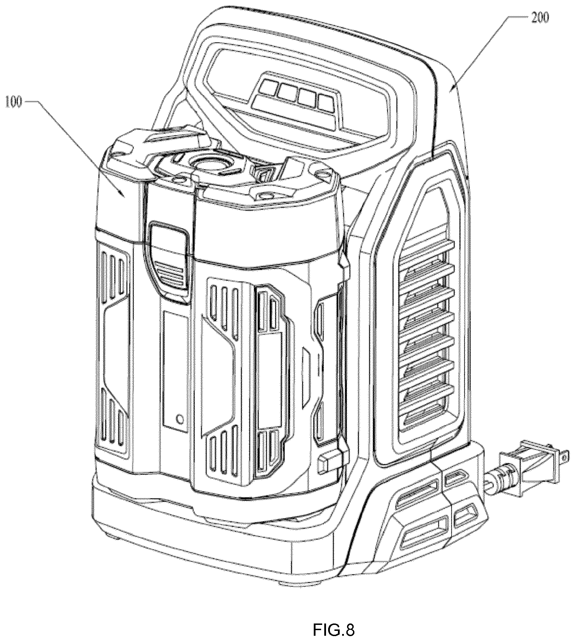

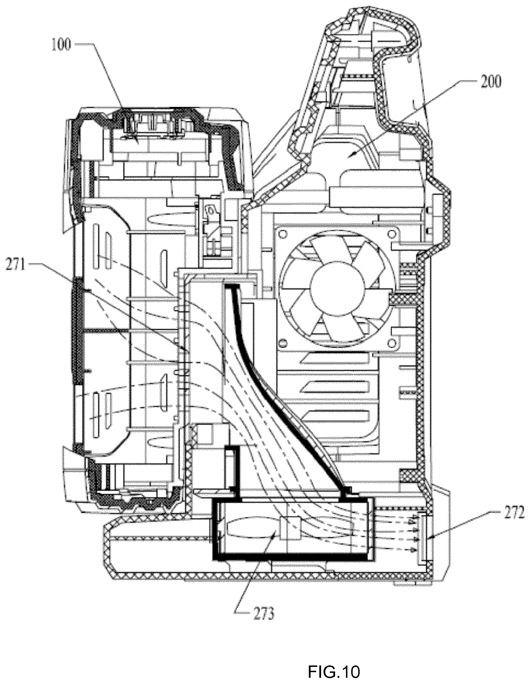

Referring to Fig. 8 to Fig. 13, the charger 200 of the present disclosure comprises a charging housing 21, a charging device, and charging terminals 23 electrically connecting the charging device 22 to the battery pack 100. The charging housing 21 comprises a charging housing wall 26 including a mounting structure 261 for mounting the battery pack 100 to a mounting position, the mounting structure 261 at least has a mounting direction K which forms an angle greater than or equal to 0 degree and less than or equal to 45 degrees with respect to the maximum projection surface F of the charging housing wall 26.

As a preferred solution, the mounting direction K is parallel to a maximum projection surface F of the charging housing wall 26. The mounting structure 261 comprises insertion protrusions 261a and a positioning protrusion 261b, and the mounting structure 261 at least comprises in the mounting direction K a mounting starting end S' and a mounting terminating end E'. A direction perpendicular to the maximum projection surface F of the charging housing wall 26 is regarded as an up-down direction, and the charging housing wall 26 is located on an upper side in the charging housing 21. Assume that the direction parallel to the mounting direction K is the front-rear direction, a side where the mounting starting end S' is located is regarded as a front side, and a side where the mounting terminating end E' is located is regarded as a rear side. The positioning protrusion 261b is protruded upwardly, and two insertion protrusions 261a are respectively disposed on left and right sides of the positioning protrusion 261b and respectively protruded leftwards and rightwards. At a front end of the insertion protrusion 261a and the positioning protrusion 261b, the charging housing wall 26 is formed with a positioning wall surface 261c for stopping the battery pack 100 to limit it in the mounting position. The charging terminal 23 is located on a side of the mounting structure 26 adjacent to the mounting starting end S'.

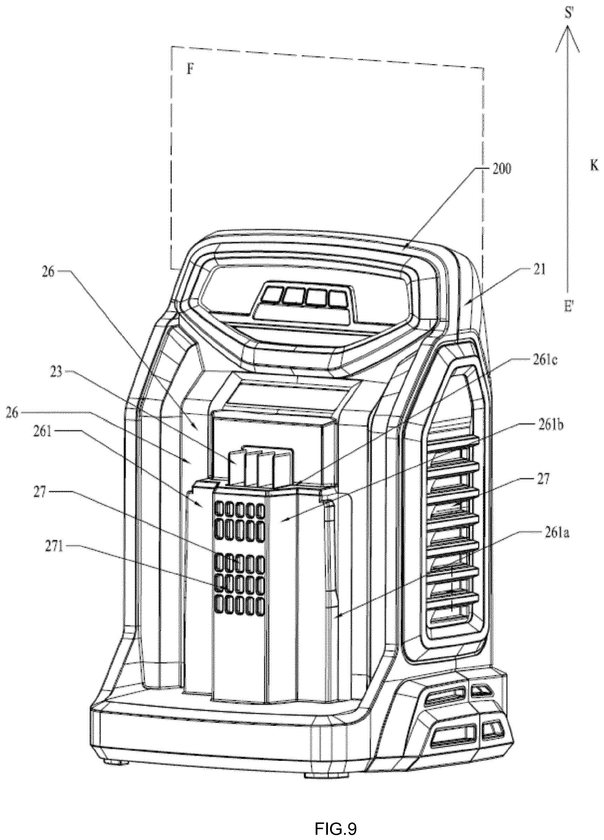

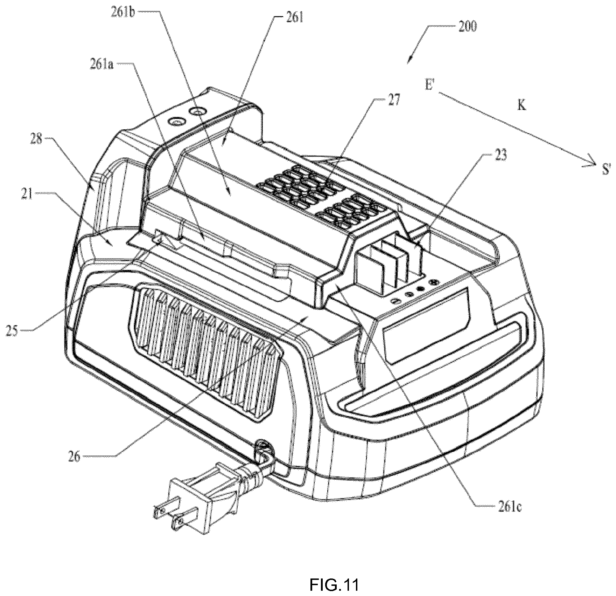

The charger 200 of the present disclosure may be in two forms as shown in Fig. 9 and Fig. 11. One is an upstanding type, and the other is a horizontal type, wherein the mounting direction K of the upstanding type is parallel to a vertical direction, and the mounting direction K of the horizontal type is parallel to the horizontal direction. Preferably, in the horizontal type, the charger 200 is provided two protrusions 28 to be caught by the user, the protrusions 28 are protruded in a horizontal direction and perpendicular to the mounting direction K, and thus symmetrically provided on one side of the positioning protrusion 261b adjacent to the mounting terminating end E'.

As can be seen from the above, the mounting structure 261 of the charging housing wall 26 in the charger 200 of the present disclosure is adapted for the insertion structure 151 of the battery pack 100 of the present disclosure, the insertion slot 151a corresponds to the insertion protrusion 261a, the receiving slot 151b corresponds to the positioning protrusion 261b, so the specific dimensions of the mounting structure may be designed by referring to the corresponding dimensions of the insertion structure 151.

As a preferred solution, to make the charging terminal 23 of the charger 200 not be in a charging state when the battery pack 100 is not yet inserted and thereby ensure the security of the user, the charger 200 further comprises a safety switch 2 disposed in the charging housing 21 and configured to control whether the charging terminal 23 is charged or not. Furthermore, an insurance switch 25 is provided at the mounting terminating end E' to be triggered by contact of the battery pack 100 at the mounting position and reset when the battery pack 100 retreats out of the mounting position. The insurance switch 25 forms a linkage with the safety switch 24. When the insurance switch 25 is triggered, the safety switch 24 places the charging terminal 23 into the charging state; when the insurance switch 25 is reset, the safety switch 24 places the charging terminal 23 into the uncharged state.

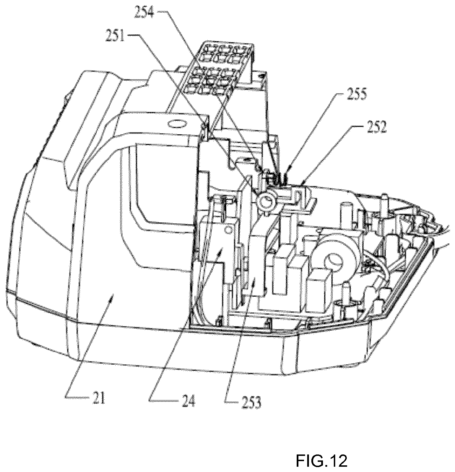

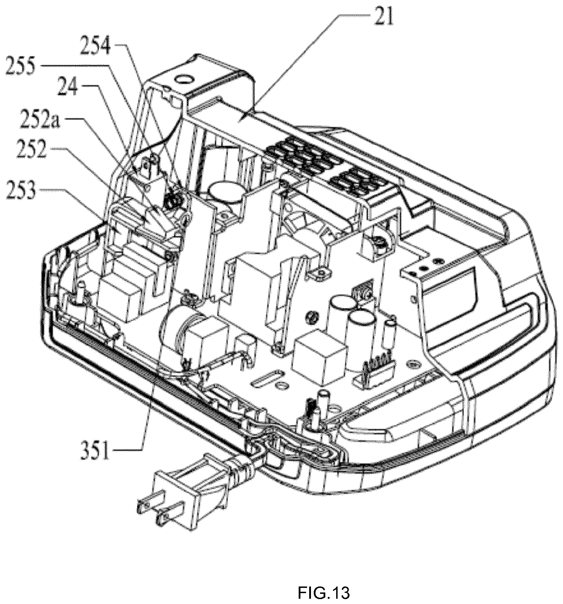

It specifically may employ the solution as shown in Figs. 12 and 13. The insurance switch 25 comprises four portions: a rotation shaft portion 251 allowing for rotatable connection with the charging housing 21, a contact portion 252 exposed at the mounting terminating end E' of the insertion protrusion 261a, a trigger portion 253 for triggering a contact of the safety switch 24, and resetting portion 254 fixed with an elastic member 255 and allowing it to be reset. The rotation shaft portion 251 enables the insurance switch 25 and the charging housing 21 to form a rotatable connection with the rotation shaft parallel to the mounting direction K, an exposed portion of the contact portion 252 forms an inclined surface 252a so that when the battery pack 100 gradually contacts with it in the mounting direction K, and when the insurance switch 25 rotates to a certain degree (i.e., when the battery pack 100 is inserted to the bottom), the trigger portion 253 triggers the contact of the safety switch 24 to place the charging terminal 23 into the charging state; when the battery pack 100 is detached, the contact portion 252 is not pressed again, whereupon the fixed elastic member 255 on the resetting portion 254 enables the insurance switch 25 to restore to an initial state, the contact of the safety switch 24 is released, and the charging terminal 23 is not charged.

As a preferred solution, to allow the battery pack 100 and the charger 200 to obtain a good heat dissipation effect upon charging, the charging housing 21 is formed with an air duct structure 27, the air duct structure 27 at least comprises an air inlet 271 and an air outlet 272. The air inlet 271 is disposed at the charging housing wall 26, and the charger is provided with an airflow element 273 in a channel between the air inlet 271 and the air outlet 272. Preferably, the air flow element 273 may be a fan. A ratio of the air inlet 271 to the air outlet 272 is greater than or equal to 1 and less than or equal to 2. It is better that the air inlet 271 is greater than 1500 mm², and an area of the air outlet 272 is greater than 1000 mm². When the battery pack 100 and the charger 200 are performing charging, the air inlet 271 is disposed exactly corresponding to the main heat dissipation window 161 of the battery pack 100 so that a complete air duct is formed in the battery pack 100 and the charger 200.

As a preferred solution, the charger 200 at least has a charging voltage of 56V and a charging power of 550W. The charging terminal 23 is configured as a sheet-shaped terminal with a thickness in a range of 0.5mm to 1mm and a distance extending out of the housing of the tool in the front direction and the up-down direction i in a range of 15mm to 20mm. The charging terminal 23 extends out of the charging housing 21 at least 7 mm.

A charging assembly of the present disclosure comprises the battery pack 100 and the charger 200 described above.

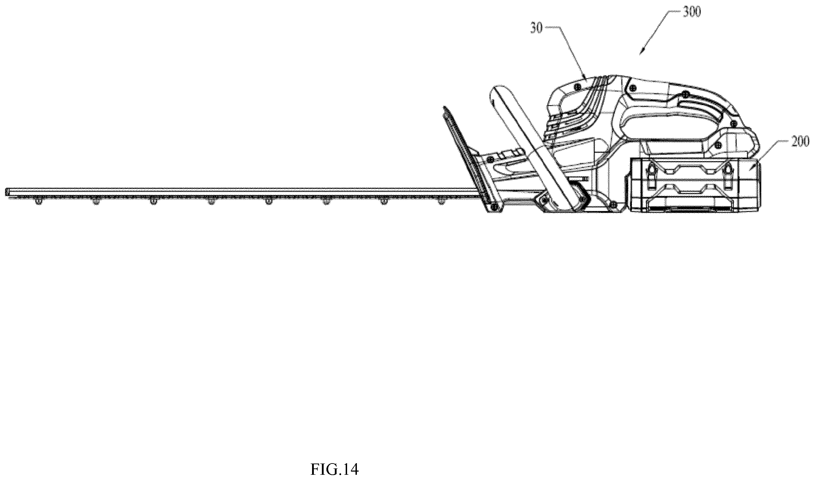

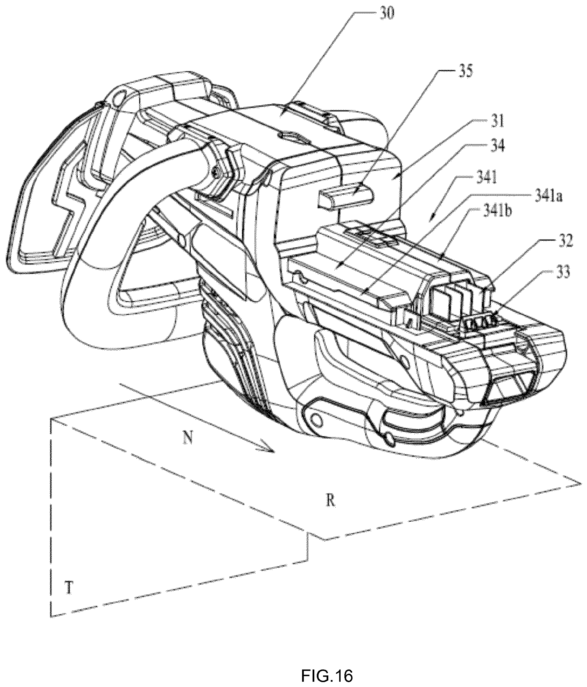

Referring to Figs. 14 to 16, the electric tool 300 according to the present disclosure comprises a main machine 30 and the above-mentioned battery pack 100.

The main machine 30 comprises a motor, a tool housing 31, and a tool terminal 32 for forming electrical energy or signal transmission with the battery pack 100, wherein the motor is disposed in the tool housing 31. The tool housing 31 comprises a loading housing wall 34 comprising a loading structure 341 for loading the battery pack 100 to a loading position (namely, a position as shown in Fig. 14).

The loading structure 341 at least has a loading direction N parallel to the insertion direction I. The loading structure 341 comprises loading protrusions 341a and a central protrusion 341b, a direction perpendicular to a maximum projection surface R of the tool housing wall 31 is regarded as an up-down direction, and a direction parallel to a loading direction N is regarded as a front-rear direction. The central protrusion 341b is protruded upward, and two loading protrusions 341a are respectively provided on left and right sides of the lower portion of the central protrusion 341b and respectively protruded leftwards and rightwards. Generally, to be mounted with the battery pack 100, the loading housing wall 34 of the main machine 30 has substantially the same structure as the charging housing wall 26 of the charger 200, so the structure and relevant dimensions of the loading housing wall 34 may be designed with reference to the corresponding structures of the charging housing wall 26.

As a preferred solution, the main machine 30 comprises a locking mechanism 33 for locking the battery pack 100 at a loading position, and the insert housing wall 26 is formed with a locking structure 151g cooperating with the locking mechanism 33. Preferably, the locking structure 151g may be disposed at a locking wall surface 151d.

The main machine 30 further comprises an ejection structure 35 for ejecting the battery pack 100 out of the loading position, and the battery pack 100 is provided with an ejection wall surface 18 contacting with the ejection mechanism 35. A maximum projection surface T of the ejection wall surface 18 is perpendicular to the loading direction N.

Preferably, a distance of the tool terminal 32 from an outer surface of the loading housing wall 34 is greater than or equal to 7 mm. The tool terminal 32 is configured as a sheet-shaped terminal with a thickness in a range of 0.5 mm to 1 mm and a distance extending out of the tool housing 31 in a range of 15 mm to 20 mm.

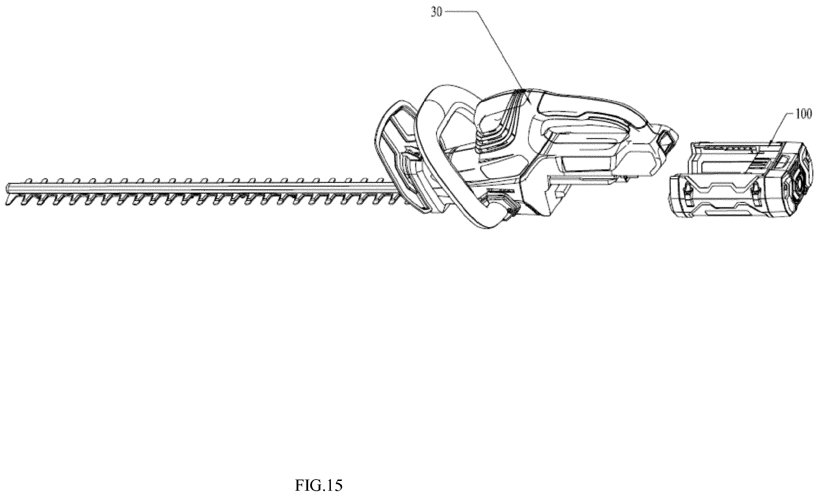

As a preferred solution, the electric tool 300 is a pruner as shown in Fig. 15. In this case, a weight ratio of the battery pack 100 and the main machine 30 is in a range of 0.4 to 0.6.

Certainly, the electric tool may be a mower, chain saw, grass trimmer, pruner, or air blower.

When the electric tool of the present disclosure is a mower, a weight ratio of the battery pack 100 and the main machine 30 is in a range of 0.04 to 0.14.

When the electric tool of the present disclosure is a chain saw, a weight ratio of the battery pack 100 and the main machine 30 is in a range of 0.250 to 0.875.

When the electric tool of the present disclosure is a grass trimmer, a weight ratio of the battery pack 100 and the main machine 30 is in a range of 0.3 to 0.8.

When the electric tool of the present disclosure is an air blower, a ratio weight of the battery pack 100 and the main machine 30 is in a range of 0.04 to 1.

Besides, as a preferred solution, the battery pack 100 of the present disclosure may use a phase change material to encapsulate the battery cell units 121 to maintain a rise rate of a temperature of the battery pack 100 below 0.9 degrees/minute.

## Claims

1. A battery pack (100), comprising:
a battery housing (11);
a battery cell assembly (12) within the battery housing; and
at least two connection terminals (13) associated with the battery housing and capable of transmitting electrical energy or signals; wherein said connection terminals are designed to be connectable to sheet-shaped charging terminals (23) of a charger (200) and/or to sheet-shaped tool terminals (32) of an electric tool (300);
wherein the battery housing comprises an insert housing wall (15), the battery cell assembly comprises more than one battery cell unit (121), the insert housing wall comprises an insertion structure (151) and terminal ports (152) for each of the at least two connection terminals, and the insertion structure at least has an insertion direction (I) which forms an angle greater than or equal to 0 degree and less than or equal to 45 degrees with respect to a maximum projection surface (A) or a maximum size direction (M) of the battery cell assembly;
**characterized in that**
said battery cell assembly comprises a left unit body (122) and a right unit body (123) which are mirror-symmetrical, and a connecting unit body (124) provided there between, wherein said left unit body (122) and said right unit body (123) form mirror symmetry, and a symmetrical mirror surface is perpendicular to a maximum projection surface (A) of said battery cell assembly (12),
wherein, if said maximum projection surface of said parallel battery cell assembly is regarded as being in the horizontal direction, said left unit body and right unit body go beyond the connecting unit body on both upper and lower sides and form two grooves (124a) and (124b) having different sizes on both sides of said connecting unit body;
wherein a distance of each of the connection terminals from an outer surface of the insert housing wall is greater than or equal to 7 mm.

2. The battery pack according to claim 1, wherein the insertion structure at least comprises an insertion starting end and an insertion terminating end in the insertion direction, and the terminal ports are located on a side of the insertion structure adjacent to the insertion terminating end.

3. The battery pack according to claim 2, wherein the maximum projection surface of the insert housing wall overlaps the maximum projection surface of the battery cell assembly and the insertion direction is parallel to the maximum projection surface and the maximum size direction of the battery cell assembly, the insertion structure comprises insertion slots (151a) and a receiving slot (151b), a direction perpendicular to the maximum projection surface of the insert housing wall is regarded as an up-down direction, a direction parallel to the insertion direction is regarded as a front-rear direction, a side where the insertion starting end is located is regarded as a front side, and a side where the insertion terminating end is located is regarded as a rear side, two insertion slots are respectively disposed on left and right sides above the receiving slot, the insertion slots and the receiving slot are opened on the front side, the two insertion slots are respectively opened leftwards and rightwards, the receiving slot is recessed downwards and opened upwards.

4. The battery pack according to claim 3, wherein the insert housing wall forms a stop wall surface behind the receiving slot, the terminal ports are partially arranged on the stop wall surface and located between the two insertion slots, the insert housing wall is formed with a wall surface structure having an L-shaped section, the wall surface structure comprises a locking wall surface corresponding to one edge of the L-shape and the stopping wall surface corresponding to the other edge of the L-shape, the locking wall surface is parallel to the maximum projection surface of the insert housing wall, the stopping wall surface is perpendicular to the maximum projection surface of the insert housing wall, and one of the terminal ports is formed by hollowing the locking wall surface and the stopping wall surface as well as a connection portion there between.

5. The battery pack according to claim 2, wherein four terminal ports are symmetrically arranged left-right, each terminal port has a left-right symmetrical structure, a distance between two terminal ports in the middle is smaller than or equal to a distance between one of the two terminal ports in the middle and the respective outside terminal port, a battery pack positive connection terminal and a battery pack negative connection terminal are correspondingly provided at the two outside terminal ports, and a communication connection terminal and a temperature connection terminal are correspondingly provided at the two inside terminal ports.

6. The battery pack according to claim 1, wherein in the insertion direction of the insertion structure, a center of gravity of the battery pack is located between the insertion starting end and the insertion terminating end.

7. The battery pack according to claim 1, wherein a ratio of the electrical energy capacity of the battery pack to its weight is greater than 70 Wh/kg and less than 100 Wh/kg; and a ratio of the electrical energy capacity of the battery pack to its volume is greater than 70 Wh/cm³ and less than 100 Wh/cm³.

8. A charger (200) for a battery pack, comprising:
a charging housing (21);
a charging device (22) carried by the charging housing; and
a sheet-shaped charging terminal (23) for electrically connecting the charging device to the battery pack;
wherein the charging housing comprises a charging housing wall (26) including a mounting structure (261) for mounting the battery pack in a mounting position, the mounting structure at least having a mounting direction (K) which forms an angle greater than or equal to 0 degree and less than or equal to 45 degrees with respect to a maximum projection surface (F) of the charging housing wall;
**characterized in that**
said sheet-shaped charging terminal is connectable to said connection terminal (13) of said battery pack (100) according to any of the preceding claims;
wherein the charger at least has a charging voltage of 56V and a charging power of 550W, the charging terminal is configured as a sheet-shaped terminal with a thickness in a range of 0.5 mm to 1 mm, and a distance extending out of the charging housing in the front direction and the up-down direction is in a range of 15 mm to 20 mm.

9. The charger according to claim 8, wherein the charger further comprises a safety switch disposed in the charging housing and configured to control whether the charging terminal is to be charged or not.

10. The charger according to claim 9, wherein the mounting direction is parallel to the maximum projection surface of the charging housing wall, the mounting structure comprises insertion protrusions and a positioning protrusion, the mounting structure comprises a mounting starting end and a mounting terminating end in the mounting direction, a direction perpendicular to the maximum projection surface of the charging housing wall is regarded as an up-down direction, the charging housing wall is located on an upper side in the charging housing, a direction parallel to the mounting direction is regarded as a front-rear direction, a side where the mounting starting end is located is regarded as a front side, a side where the mounting terminating end is located is regarded as a rear side, the positioning protrusion is protruded upwardly, and two insertion protrusions are respectively disposed on left and right bottom sides of the positioning protrusion and respectively protruded leftwards and rightwards.

11. The charger according to claim 10, wherein at a front end of the insertion protrusion and the positioning protrusion, a positioning wall surface is formed on the charging housing wall for stopping the battery pack to limit insertion to the mounting position and the charging terminal is located on a side of the mounting structure adjacent to the mounting starting end.

12. The charger according to claim 11, wherein an insurance switch is provided at the mounting terminating end to be triggered by contact of the battery pack at the mounting position and to be reset when the battery pack retreats out of the mounting position, the insurance switch forming a linkage with the safety switch, the safety switch causing the charging terminal to be charged when the insurance switch is triggered, and the safety switch causing the charging terminal to be uncharged when the insurance switch is reset.

13. The charger according to claim 12, wherein the charging housing is formed with an air duct structure, the air duct structure comprises an air inlet and an air outlet, the air inlet is disposed at the charging housing wall, and the charger is provided with an air flow element in a channel between the air inlet and the air outlet.

14. The charger according to claim 13, wherein the charging terminal is disposed at the positioning wall surface and located between the two insertion protrusions and the maximum projection surface of the charging housing wall is perpendicular to a horizontal plane.

15. An electric tool (300), comprising:
a main machine (30); and
a battery pack (100) according to any of claims 1 to 7 for providing power to the main machine;
wherein the main machine comprising a motor, a tool housing (31), and the tool terminal (32) for forming electrical energy or signal transmission connection with the battery pack, the motor being disposed in the tool housing, and the tool housing comprises a loading housing wall (34) having a loading structure (341) for loading the battery pack to a loading position.

16. The electric tool according to claim 15, wherein the loading structure at least has a loading direction (N) parallel to the insertion direction, the loading structure comprises loading protrusions (341a) and a central protrusion (341b), a direction perpendicular to the maximum projection surface of the tool housing wall is regarded as an up-down direction, a direction parallel to a loading direction is regarded as a front-rear direction, the central protrusion are protruded upward, and two loading protrusions are respectively provided on left and right bottom sides of the central protrusion and respectively protruded leftwards and rightwards.

17. The electric tool according to claim 16, wherein the main machine further comprises a locking mechanism (33) for locking the battery pack at the loading position, the insert housing wall is formed with a locking structure (151g) for cooperating with the locking mechanism of the main machine, and an ejection structure for ejecting the battery pack out of the loading position, and wherein the battery pack is provided with an ejection wall surface for contacting the ejection structure and a maximum projection surface (R) of the ejection wall surface is perpendicular to the loading direction.

18. The electric tool according to claim 17, wherein a distance of the tool terminal from an outer surface of the loading housing wall is greater than or equal to 7 mm, the tool terminal is configured as a sheet-shaped terminal with a thickness in a range of 0.5 mm to 1 mm, and a distance extending out of the tool housing in a range of 15 mm to 20 mm.

19. The electric tool according to claim 18, wherein a weight ratio of the battery pack to the main machine is in a range of 0.04 to 0.14 when the electric tool is a mower, a weight ratio of the battery pack to the main machine is in a range of 0.4 to 0.6 when the electric tool is a pruner, a weight ratio of the battery pack to the main machine is in a range of 0.250 to 0.875 when the electric tool is a chain saw, a weight ratio of the battery pack to the main machine is in a range of 0.04 to 1 when the electric tool is an air blower, and a weight ratio of the battery pack to the main machine is in a range of 0.3 to 0.8 when the electric tool is a grass trimmer.

## Patentansprüche

1. Batteriesatz (100), umfassend:
ein Batteriegehäuse (11);
eine Batteriezellenbaueinheit (12) innerhalb des Batteriegehäuses; und
mindestens zwei Anschlussklemmen (13), die mit dem Batteriegehäuse verbunden sind und in der Lage sind, elektrische Energie oder Signale zu übertragen; wobei die Anschlussklemmen dafür ausgelegt sind, mit bogenförmigen Ladeterminals (23) einer Ladevorrichtung (200) und/oder mit bogenförmigen Werkzeugklemmen (32) eines elektrischen Werkzeugs (300) verbunden zu werden;
wobei das Batteriegehäuse eine Einsatzgehäusewand (15) umfasst, die Batteriezellenbaueinheit umfasst mehr als eine Batteriezelleneinheit (121), die Einsatzgehäusewand umfasst eine Einführungsstruktur (151) und Anschlussports (152) für jede der mindestens zwei Anschlussklemmen, und die Einführungsstruktur hat mindestens eine Einführungsrichtung (I), die einen Winkel bildet, der größer oder gleich 0° ist und kleiner oder gleich 45° in Bezug auf eine maximale Projektionsfläche (A) oder eine maximale Größenrichtung (M) der Batteriezellenbaueinheit;
**dadurch gekennzeichnet, dass**
die Batteriezellenbaueinheit einen linken Einheitskörper (122) und einen rechten Einheitskörper (123), die spiegelsymmetrisch sind, und einen Verbindungseinheitskörper (124), der dort dazwischen vorgesehen ist, wobei der linke Einheitskörper (122) und der rechte Einheitskörper (123) eine Spiegelsymmetrie aufweisen, und eine symmetrische Spielfläche ist senkrecht zu einer maximalen Projektionsfläche (A) der Batteriezellenbaueinheit (12), wobei, wenn die maximale Projektionsfläche der parallelen Batteriezellenbaueinheit als in der horizontalen Richtung liegend betrachtet wird, der linke Einheitskörper und der rechte Einheitskörper über den Verbindungseinheitskörper auf beiden oberen und unteren Seiten hinausgehen und zwei Nuten (124a) und (124b) bilden, die unterschiedliche Größe auf beiden Seiten des Verbindungseinheitskörpers haben;
wobei ein Abstand jedes der Verbindungsterminals von einer Außenfläche der Einführungs-Gehäusewand größer oder gleich 7 mm ist.

2. Batteriesatz nach Anspruch 1, wobei die Einführungsstruktur zumindest ein Einführungs-Startende und ein Einführungs-Abschlussende in der Einführungsrichtung umfasst, und die Anschlussports befinden sich auf einer Seite der Einführungsstruktur angrenzend an das Einführungs-Abschlussende.

3. Batteriesatz nach Anspruch 2, wobei die maximale Projektionsfläche der Einführungs-Gehäusewand die maximale Projektionsfläche der Batteriezellenbaueinheit überlappt, und die Einführungsrichtung ist parallel zur maximalen Projektionsfläche und der maximalen Größenrichtung der Batteriezellenbaueinheit, die Einführungsstruktur umfasst Einführungsschlitze (151a) und einen Aufnahmeschlitz (151b), eine Richtung senkrecht zur maximalen Projektionsfläche der Einführungs-Gehäusewand wird als Richtung oben-unten betrachtet, eine Richtung parallel zur Einführungsrichtung wird als Richtung vorn-hinten betrachtet, eine Seite, wo das Einführungs-Startende sich befindet, wird als Vorderseite betrachtet, und eine Seite, wo das Einführungs-Abschlussende sich befindet, wird als Rückseite betrachtet, zwei Führungsschlitze sind jeweils auf der linken und rechten Seite oberhalb des Aufnahme Schlitzes angeordnet, die Einführungsschlitze und der Aufnahmeschlitz werden an der Vorderseite geöffnet, die zwei Einführungsschlitze werden nach links bzw. rechts geöffnet, der Aufnahmeschlitz ist nach unten vertieft und wird nach oben geöffnet.

4. Batteriesatz nach Anspruch 3, wobei die Einführungsgehäusewand eine Anschlagwandfläche hinter dem Aufnahmeschlitz bildet, die Anschlussports sind teilweise auf der Anschlagwandfläche angeordnet und befinden sich zwischen den zwei Einführungsschlitzen, die Einführungsgehäusewand ist mit einer Wandflächenstruktur gebildet, die einen L-förmigen Abschnitt hat, die Wandflächenstruktur umfasst eine Sperrwandfläche, die einer Kante der L-Form entspricht, und die Anschlagswandfläche entspricht der anderen Kante der L-Form, die Sperrwandfläche ist parallel zur maximalen Projektionsfläche der Einführungsgehäusewand, die Anschlagwandfläche ist senkrecht zur maximalen Projektionsfläche der Einführungsgehäusewand, und einer der Anschlussports wird durch Vertiefen der Sperrwandfläche und der Anschlagwandfläche und eines Verbindungsteils dazwischen gebildet.

5. Batteriesatz nach Anspruch 2, wobei vier Anschlussports symmetrisch linksrechts angeordnet sind, jeder Anschlussport hat eine links-rechtssymmetrische Struktur, ein Abstand zwischen zwei Anschlussports in der Mitte ist kleiner oder gleich einem Abstand zwischen einem der zwei Anschlussports in der Mitte und dem jeweiligen äußeren Anschlussport, ein Batteriesatz-Positivanschluss und ein Batteriesatz-Negativanschluss sind entsprechend an den zwei äußeren Anschlussports vorgesehen, und ein Kommunikationsanschlussport und ein Temperaturanschlussport sind entsprechend an den zwei Innenseiten-Anschlussports vorgesehen.

6. Batteriesatz nach Anspruch 1, wobei in Einführungsrichtung der Einführungsstruktur sich ein Schwerpunkt des Batteriesatzes zwischen dem Einführungs-Startende und dem Einführungs- Abschlussende befindet.

7. Batteriesatz nach Anspruch 1, wobei ein Verhältnis der elektrischen Energiekapazität des Batteriesatzes zu seinem Gewicht größer als 70 Wh/kg und kleiner als 100 Wh/kg ist; und ein Verhältnis der elektrischen Energiekapazität des Batteriesatzes zu seinem Volumen ist größer als 70 Wh/cm³ und kleiner als 100 Wh/cm³.

8. Ladegerät (200) für einen Batteriesatz, umfassend:
ein Ladegehäuse (21);
eine Ladevorrichtung (22), die vom Ladegehäuse getragen wird; und
ein blattförmiges Ladeterminal (23) zur elektrischen Verbindung der Ladevorrichtung mit dem Batteriesatz;
wobei das Ladegehäuse eine Ladegehäusewand (26) umfasst, die eine Befestigungsstruktur (261) zum Befestigen des Batteriesatzes in einer Befestigungsposition enthält, wobei die Befestigungsstruktur zumindest eine Befestigungsrichtung (K) hat, die einen Winkel von größer oder gleich 0° und kleiner oder gleich 45° gegenüber einer maximalen Projektionsfläche (F) der Ladegehäusewand bildet;
**dadurch gekennzeichnet, dass**
das blattförmige Ladeterminal an den Verbindungsanschluss (13) des Batteriesatzes (100) nach einem der vorherigen Ansprüche angeschlossen werden kann;
wobei das Ladegerät zumindest eine Ladespannung von 56 V und eine Ladeleistung von 550 W hat, wobei das Ladeterminal als blattförmiges Terminal mit einer Dicke im Bereich von 0,5 mm - 1 mm ausgelegt ist, und ein Abstand, der sich aus dem Ladegehäuse in Frontrichtung und in der Richtung oben unten erstreckt, ist im Bereich von 15 mm bis 20 mm.

9. Ladegerät nach Anspruch 8, wobei das Ladegerät ferner einen Sicherheitsschalter enthält, der im Ladegehäuse angeordnet ist und dafür ausgelegt ist, zu steuern, ob das Ladeterminal geladen werden soll oder nicht.

10. Ladegerät nach Anspruch 9, wobei die Befestigungsrichtung parallel zur maximalen Projektionsfläche der Ladegehäusewand ist, die Befestigungsstruktur umfasst Einführungsvorsprünge und einen Positionierungsvorsprung, die Befestigungsstruktur umfasst ein Befestigungs-Startende und ein Befestigungs-Abschlussende in Befestigungsrichtung, eine Richtung senkrecht zur maximalen Projektionsfläche der Ladegehäusewand wird als Richtung oben-unten betrachtet, die Ladegehäusewand befindet sich auf einer Oberseite im Ladegehäuse, eine Richtung parallel zur Befestigungsrichtung wird als Richtung vorn-hinten betrachtet, eine Seite, auf der sich das Befestigungs-Startende befindet, wird als Vorderseite betrachtet, eine Seite, auf der sich das Befestigungs-Abschlussende befindet, wird als Rückseite betrachtet, der Positionierungsvorsprung ragt nach oben vor, und zwei Einführungsvorsprünge sind auf der linken bzw. rechten Unterseite der Positionierungsvorsprünge und ragen nach links bzw. rechts vor.

11. Ladegerät nach Anspruch 10, wobei an einem vorderen Ende des Einführungsvorsprungs und des Positionierungsvorsprungs eine Positionierungswandfläche auf der Ladegehäusewand zum Stoppen des Batteriesatzes gebildet ist, um das Einführen auf die Befestigungsposition zu begrenzen, und das Ladeterminal befindet sich auf einer Seite der Befestigungsstruktur angrenzend an das Befestigungs-Startende.

12. Ladegerät nach Anspruch 11, wobei ein Absicherungsschalter am Befestigungs-Abschlussende vorgesehen ist, der ausgelöst werden soll durch Kontakt des Batteriesatzes in der Befestigungsposition und der rückgesetzt werden soll, wenn der Batteriesatz aus der Befestigungsposition entfernt wird, wobei der Absicherungsschalter eine Verbindung mit dem Sicherheitsschalter bildet, wobei der Sicherheitsschalter bewirkt, dass das Ladeterminal geladen wird, wenn der Absicherungsschalter ausgelöst ist, und wobei der Sicherheitsschalter bewirkt, dass das Ladeterminal entladen wird, wenn der Absicherungsschalter zurückgesetzt ist.

13. Ladegerät nach Anspruch 12, wobei das Ladegehäuse mit einer Luftkanalstruktur gebildet ist, die Luftkanalstruktur einen Lufteinlass und einen Luftauslass umfasst, der Lufteinlass an der Ladegehäusewand angeordnet ist und das Ladegerät mit einem Luftströmungselement in einem Kanal zwischen dem Lufteinlass und dem Luftauslass versehen ist.

14. Ladegerät nach Anspruch 13, wobei das Ladeterminal an der Positionierwandfläche positioniert ist und sich zwischen den zwei Einführungsvorsprüngen befindet, und die maximale Projektionsfläche der Ladegehäusewand ist senkrecht zu einer horizontalen Ebene.

15. Elektrisches Werkzeug (300), umfassend:
eine Hauptmaschine (30); und
einen Batteriesatz (100) nach einem der Ansprüche 1 bis 7 zum Bereitstellen von Leistung für die Hauptmaschine;
wobei die Hauptmaschine einen Motor, ein Werkzeuggehäuse (31) und das Werkzeugterminal (32) zum Bilden einer elektrischer Energie- oder Signalübertragungsverbindung mit dem Batteriesatz umfasst, wobei der Motor im Werkzeuggehäuse angeordnet ist, und das Werkzeuggehäuse umfasst eine Ladegehäusewand (34), die eine Ladestruktur (341) zum Laden des Batteriesatzes in einer Ladeposition hat.

16. Elektrisches Werkzeug nach Anspruch 15, wobei die Ladestruktur mindestens eine Laderichtung (N) parallel zur Einführungsrichtung hat, die Ladestruktur umfasst Ladevorsprünge (341a) und einen zentralen Vorsprung (341b), eine Richtung senkrecht zur maximalen Projektionsfläche der Werkzeuggehäusewand wird als Richtung oben-unten betrachtet, eine Richtung parallel zu einer Laderichtung wird als Richtung vorn-hinten betrachtet, der zentrale Vorsprung ragt nach oben, und zwei Ladevorsprünge sind auf der linken bzw. rechten Unterseite des zentralen Vorsprungs und ragen nach links bzw. nach rechts vor.

17. Elektrisches Werkzeug nach Anspruch 16, wobei die Hauptmaschine ferner einen Verriegelungsmechanismus (33) zum Verriegeln des Batteriesatzes in der Ladeposition umfasst, die Einführungsgehäusewand ist mit einer Verriegelungsstruktur (151g) zur Kooperation mit dem Verriegelungsmechanismus der Hauptmaschine und mit einem Auswurfmechanismus zum Auswerfen des Batteriesatzes der Ladeposition gebildet, und wobei der Batteriesatz mit einer Auswurfwandfläche zum Kontaktieren der Auswurfstruktur versehen, und eine maximale Projektionsfläche (R) der Auswurfwandfläche ist senkrecht zur Laderichtung.

18. Elektrisches Werkzeug nach Anspruch 17, wobei ein Abstand des Werkzeugterminals von einer Außenfläche der Ladegehäusewand größer oder gleich 7 mm ist, das Werkzeugterminal ist als blattförmiges Terminal mit einer Dicke in einem Bereich von 0,5 mm bis 1 mm und einem Abstand ausgelegt, der sich aus dem Werkzeuggehäuse in einem Bereich von 15 mm bis 20 mm erstreckt.

19. Elektrisches Werkzeug nach Anspruch 18, wobei ein Gewichtsverhältnis des Batteriesatzes zur Hauptmaschine in einem Bereich von 0,04 bis 0,14 liegt, wenn das elektrische Werkzeug ein Mäher ist, ein Gewichtsverhältnis des Batteriesatzes zur Hauptmaschine liegt in einem Bereich von 0,4 bis 0,6, wenn das elektrische Werkzeug eine Gartenschere ist, ein Gewichtsverhältnis des Batteriesatzes zur Hauptmaschine liegt in einem Bereich von 0,250 bis 0,875, wenn das elektrische Gerät eine Kettensäge ist, ein Gewichtsverhältnis des Batteriesatzes zur Hauptmaschine liegt in einem Bereich von 0,04 bis 1, wenn das elektrische Werkzeug ein Gebläse ist, und ein Gewichtsverhältnis des Batteriesatzes zur Hauptmaschine liegt in einem Bereich von 0,3 bis 0,8, wenn das elektrische Werkzeug eine Grasschere ist.

## Revendications

1. Ensemble de batterie (100), comprenant :
un compartiment à batterie (11) ;
un ensemble de cellules de batterie (12) à l'intérieur du compartiment à batterie ; et
au moins deux bornes de connexion (13) associées au compartiment à batterie et capables de transmettre de l'énergie électrique ou des signaux ; dans lequel lesdites bornes de connexion sont conçues pour pouvoir être connectées à des bornes de chargement en forme de feuille (23) d'un chargeur (200) et/ou des bornes d'outil en forme de feuille (32) d'un outil électrique (300) ;
dans lequel le compartiment à batterie comprend une paroi de compartiment d'insert (15), l'ensemble de cellules de batterie comprend plus d'une unité de cellule de batterie (121), la paroi de compartiment d'insert comprend une structure d'insertion (151) et des ports de borne (152) pour chacune des au moins deux bornes de connexion, et la structure d'insertion a au moins une direction d'insertion (I) qui forme un angle supérieur ou égal à 0 degrés et inférieur ou égal à 45 degrés par rapport à une surface de projection maximale (A) ou une direction de taille maximale (M) de l'ensemble de cellules de batterie ;
**caractérisé en ce que**
ledit ensemble de cellules de batterie comprend un corps d'unité gauche (122) et un corps d'unité droit (123) qui sont en symétrie de miroir, et un corps d'unité de connexion (124) prévu entre eux, dans lequel ledit corps d'unité gauche (122) et ledit corps d'unité droit (123) forment une symétrie de miroir, et une surface de miroir symétrique est perpendiculaire à une surface de projection maximale (A) dudit ensemble de cellules de batterie (12),
dans lequel, si ladite surface de projection maximale dudit ensemble de cellules de batterie est considérée comme étant dans la direction horizontale, ledit corps d'unité gauche et ledit corps d'unité droit vont au-delà du corps d'unité de connexion sur les deux côtés supérieur et inférieur et forment deux rainures (124a) et (124b) ayant différentes tailles sur les deux côtés du corps d'unité de connexion ;
dans lequel une distance de chacune des bornes de connexion depuis une surface extérieure de la paroi de compartiment d'insert est supérieure ou égale à 7 mm.

2. Ensemble de batterie selon la revendication 1, dans lequel la structure d'insertion comprend au moins une extrémité de début d'insertion et une extrémité de fin d'insertion dans la direction d'insertion, et les ports de borne sont situés sur un côté de la structure d'insertion adjacent à l'extrémité de fin d'insertion.

3. Ensemble de batterie selon la revendication 2, dans lequel la surface de projection maximale de la paroi de compartiment de batterie chevauche la surface de projection maximale de l'ensemble de cellules de batterie et la direction d'insertion est parallèle à la surface de projection maximale et à la direction de taille maximale de l'ensemble de cellules de batterie, la structure d'insertion comprend des fentes d'insertion (151a) et une fente de réception (151b), une direction perpendiculaire à la surface de projection maximale de la paroi de compartiment d'insert est considérée en tant qu'une direction haut-bas, une direction parallèle à la direction d'insertion est considérée en tant qu'une direction avant-arrière, et un côté où l'extrémité de début d'insertion est située est considéré en tant qu'un côté avant, et un côté où l'extrémité de fin d'insertion est située est considéré en tant qu'un côté arrière, deux fentes d'insertion sont respectivement disposées sur des côtés gauche et droit au-dessus de la fente de réception, les fentes d'insertion et la fente de réception sont ouvertes sur le côté avant, les deux fentes d'insertion sont respectivement ouvertes vers la gauche et vers la droite, la fente de réception est en creux vers le bas et ouverte vers le haut.

4. Ensemble de batterie selon la revendication 3, dans lequel la paroi de compartiment d'insert forme une surface de paroi de butée derrière la fente de réception, les ports de borne sont agencés partiellement sur la surface de paroi de butée et situés entre les deux fentes d'insertion, la paroi de compartiment d'insert est formée avec une structure de surface de paroi ayant une section en L, la structure de surface de paroi comprend une surface de paroi de verrouillage correspondant à un bord de la forme en L et la surface de paroi de verrouillage correspondant à l'autre bord de la forme en L, la surface de paroi de verrouillage est parallèle à la surface de projection maximale de la paroi de compartiment d'insert, la surface de paroi de verrouillage est perpendiculaire à la surface de projection maximale de la paroi de compartiment d'insert, et un des ports de borne est formé en creusant la surface de paroi de verrouillage et la surface de paroi de butée ainsi qu'en tant qu'une partie de connexion entre.

5. Ensemble de batterie selon la revendication 2, dans lequel quatre ports de borne sont agencés symétriquement gauche-droite, chaque port de borne a une structure symétrique gauche-droite, une distance entre deux ports de borne au centre est inférieure ou égale à une distance entre un des deux ports de borne au centre et le port de borne extérieur respectif, une borne de connexion positive de l'ensemble de batterie et une borne de connexion négative de l'ensemble de batterie sont prévues de manière correspondante sur les deux ports de borne extérieurs, et une borne de connexion de communication et une borne de connexion de température sont prévues de manière correspondante sur les deux ports de borne intérieurs.

6. Ensemble de batterie selon la revendication 1, dans lequel dans la direction d'insertion de la structure d'insertion, un centre de gravité de l'ensemble de batterie est situé entre l'extrémité de début d'insertion et l'extrémité de fin d'insertion.

7. Ensemble de batterie selon la revendication 1, dans lequel un rapport de la capacité d'énergie électrique de l'ensemble de batterie à son poids est supérieur à 70 Wh/kg et inférieur à 100 Wh/kg ; et un rapport de la capacité d'énergie électrique de l'ensemble de batterie à son volume est supérieur à 70 Wh/cm³ et inférieur à 100 Wh/cm³.

8. Chargeur (200) pour un ensemble de batterie, comprenant :
un compartiment de chargement (21) ;
un dispositif de chargement (22) supporté par le compartiment de chargement ; et
une borne de chargement en forme de feuille (23) pour connecter électriquement le dispositif de chargement à l'ensemble de batterie ;
dans lequel le compartiment de chargement comprend une paroi de compartiment de chargement (26) incluant une structure de montage (261) pour monter l'ensemble de batterie dans une position de montage, la structure de montage ayant au moins une direction de montage (K) qui forme un angle supérieur ou égal à 0 degré et inférieur ou égal à 45 degrés par rapport à une surface de projection maximale (F) de la paroi de compartiment de chargement ;
**caractérisé en ce que**
ladite borne de chargement en forme de feuille peut être connectée à ladite borne de connexion (13) dudit ensemble de batterie (100) selon l'une quelconque des revendications précédentes ;
dans lequel le chargeur a au moins une tension de chargement de 56V et une puissance de chargement de 550W, la borne de chargement est configurée en tant qu'une borne en forme de feuille avec une épaisseur dans la page de 0,5 mm à 1 mm, et une distance s'étendant hors du compartiment de chargement dans la direction avant et la direction haut-bas est dans une plage de 15 mm à 20 mm.

9. Chargeur selon la revendication 8, dans lequel le chargeur comprend en outre un interrupteur de sécurité disposé dans le compartiment de chargement et configuré pour contrôler si la borne de chargement doit être chargée ou non.

10. Chargeur selon la revendication 9, dans lequel la direction de montage est parallèle à la surface de projection maximale de la paroi de compartiment de chargement, la structure de montage comprend des saillies d'insertion et une saillie de positionnement, la structure de montage comprend une extrémité de début de montage et une extrémité de fin de montage dans la direction de montage, une direction perpendiculaire à la surface de projection maximale de la paroi de compartiment de chargement est considérée en tant qu'une direction haut-bas, la paroi de compartiment de chargement est située sur un côté supérieur dans le compartiment de charge, une direction parallèle à la direction de montage est considérée en tant qu'une direction avant-arrière, un côté où l'extrémité de début de montage est située est considéré en tant qu'un côté avant, un côté où l'extrémité de fin de montage est située est considéré en tant qu'un côté arrière, la saillie de positionnement fait saillie vers le haut, et deux sailles d'insertion sont disposées respectivement sur des côtés inférieurs gauche et droit de la saillie de positionnement et respectivement en saillie vers la gauche et la vers la droite.

11. Chargeur selon la revendication 10, dans lequel sur une extrémité avant de la saillie d'insertion et de la saillie de positionnement, une surface de paroi de positionnement est formée sur la paroi de compartiment de chargement pour arrêter l'ensemble de batterie pour limiter l'insertion à la position de montage et la borne de chargement est située sur un côté de la structure de montage adjacent à l'extrémité de début de montage.

12. Chargeur selon la revendication 11, dans lequel un interrupteur d'assurance est prévu sur l'extrémité de fin de montage pour être déclenché par contact de l'ensemble de batterie à la position de montage et pour être réarmé lorsque l'ensemble de batterie se retire de la position de montage, l'interrupteur d'assurance formant une liaison avec l'intérieur de sécurité, l'interrupteur de sécurité faisant que la borne de chargement est chargée lorsque l'interrupteur d'assurance est déclenché, et l'interrupteur de sécurité faisant que la borne de chargement est déchargée lorsque l'interrupteur d'assurance est réarmé.

13. Chargeur selon la revendication 12, dans lequel le compartiment de chargement est formé avec une structure de conduit d'air, la structure de conduit d'air comprend une entrée d'air et une sortie d'air, l'entrée d'air est disposée sur la paroi de compartiment de chargement, et le chargeur est doté d'un élément de flux d'air dans un canal entre l'entrée d'air et la sortie d'air.

14. Chargeur selon la revendication 13, dans lequel la borne de chargement est disposée sur la surface de paroi de positionnement et située entre les deux saillies d'insertion et la surface de projection maximale de la paroi de compartiment de chargement est perpendiculaire à un plan horizontal.

15. Outil électrique (300), comprenant :
une machine principale (30) ; et
un ensemble de batterie (100) selon l'une quelconque des revendications 1 à 7 pour fournir du courant à la machine principale ;
dans lequel la machine principal comprend un moteur, un logement d'outil (31), et la borne d'outil (32) pour former la connexion d'énergie électrique ou de transmission de signal avec l'ensemble de batterie, le moteur étant disposé dans le logement d'outil, et le logement d'outil comprend une paroi de logement de placement (34) ayant une structure de placement (341) pour placer l'ensemble de batterie dans une position de placement.

16. Outil électrique selon la revendication 15, dans lequel la structure de placement comprend au moins une direction de placement (N) parallèle à la direction d'insertion, la structure de placement comprend des saillies de placement (341a) et une saillie centrale (341b), une direction perpendiculaire à la surface de saillie maximale de la paroi de logement d'outil est considérée en tant qu'une direction haut-bas, une direction parallèle à une direction de placement est considérée en tant qu'une direction avant-arrière, la saillie centrale est en saillie vers le haut, et deux saillies de placement sont respectivement prévues sur des côtés inférieurs gauche et droit de la saillie centrale et respectivement en saillie vers la gauche et vers la droite.

17. Outil électrique selon la revendication 16, dans lequel la machine principale commande en outre un mécanisme de verrouillage (33) pour verrouiller l'ensemble de batterie sur la position de placement, la paroi de compartiment d'insert est formée avec une structure de verrouillage (151g) pour coopérer avec le mécanisme de verrouillage de la machine principale, et une structure d'éjection pour éjecter l'ensemble de batterie hors de la position de placement, et dans lequel l'ensemble de batterie est doté d'une surface de paroi d'éjection pour contacter la structure d'éjection et une surface de saillie maximale (R) de la surface de paroi d'éjection est perpendiculaire à la direction de placement.

18. Outil électrique selon la revendication 17, dans lequel une distance de la borne d'outil depuis une surface extérieure de la paroi de compartiment de placement est supérieure à ou égale à 7 mm, la borne d'outil est configurée en tant qu'une borne en forme de feuille avec une épaisseur dans une plage de 0,5 mm à 1 mm, et une distance s'étendant hors du logement d'outil dans une plage de 15 mm à 20 mm.

19. Outil électrique selon la revendication 18, dans lequel un rapport de poids de l'ensemble de batterie à la machine principale est dans une plage de 0,04 à 0,14 lorsque l'outil électrique est une faucheuse, un rapport de poids de l'ensemble de batterie à la machine principale est dans une plage de 0,4 à 0,6 lorsque l'outil électrique est une serpette, un rapport de poids de l'ensemble de batterie à la machine principale est dans une plage de 0,250 à 0,875 lorsque l'outil électrique est une tronçonneuse, un rapport de poids de l'ensemble de batterie à la machine principale est dans une plage de 0,04 à 1 lorsque l'outil électrique est une souffleuse d'air et un rapport de poids de l'ensemble de batterie à la machine principale est dans une plage de 0,3 à 0,8 lorsque l'outil électrique est un coupe-herbe.
